(19) Europäisches Patentamt
European Patent Office
Office européen des brevets

(11) EP 1 650 172 A1

(12) **EUROPEAN PATENT APPLICATION**
published in accordance with Art. 158(3) EPC

(43) Date of publication:
26.04.2006 Bulletin 2006/17

(51) Int Cl.:
*C03B 37/018* (1985.01)

(21) Application number: 04747210.5

(86) International application number:
PCT/JP2004/009742

(22) Date of filing: 08.07.2004

(87) International publication number:
WO 2005/005331 (20.01.2005 Gazette 2005/03)

(84) Designated Contracting States:
DE FR GB

(30) Priority: 10.07.2003 JP 2003272922

(71) Applicant: Shin-Etsu Chemical Co., Ltd.
Chiyoda-ku,
Tokyo 100-0004 (JP)

(72) Inventors:
• KUME, Hiroyuki
  Annaka-shi, Gunma 3790195 (JP)
• SHIMADA, Tadakatsu
  Annaka-shi, Gunma 3790195 (JP)

(74) Representative: Pfenning, Meinig & Partner GbR
Patent- und Rechtsanwälte
Theresienhöhe 13
80339 München (DE)

(54) **METHOD OF MANUFACTURING OPTICAL FIBER BASE MATERIAL**

(57) There is provided a method for manufacturing an optical fiber base material by means of a vapor-phase axial deposition method. The method includes preparing a raw material supplying pipe that supplies raw gas centrally and a supporting gas channel and a combustion gas channel that are concentrically disposed outside the pipe, using a multiple flame burner forming a plurality of concentric flames, and generating and depositing glass particles in a state where a condition of $V_i < V_m \leq 2V_i$ is satisfied when linear velocity of a flow of the most inside flame is $V_i$ and linear velocity of the raw gas is $V_m$. Preferably, the condition satisfies that $1.3V_i < V_m \leq 1.8V_i$.

FIG. 2

**Description**

BACKGROUND OF THE INVENTION

Field of the Invention

The present application also relates to the following application, the contents of which are incorporated herein by reference if applicable.
A Japanese Patent Application No. 2003-272922
Filed on July 10, 2003
The present invention relates to a method for manufacturing an optical fiber base material in which glass particles generated by a flame hydrolysis reaction of frit are efficiently deposited at high speed by means of a vapor-phase axial deposition method.

Description of Related Art

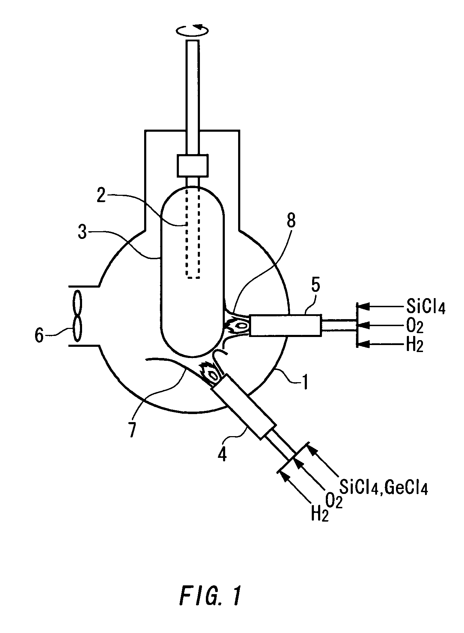

The method for manufacturing an optical fiber base material includes, e.g., a vapor-phase axial deposition method. However, the vapor-phase axial deposition method is a method of depositing glass particles generated by a flame hydrolysis reaction of raw gas on a starting member pulled up while rotating in order to form a porous base material, and sintering and transparently vitrifying the base material to obtain a base material ingot. The base material ingot is further elongated to have a shape and a size suited for the formation of optical fiber, in order to be an optical fiber base material (a preform).
The vapor-phase axial deposition method is, as shown in Fig. 1, a method of depositing glass particles generated by a flame hydrolysis reaction of frit on a target rod 2 hung down in a chamber 1, in order to form a porous base material 3. The target rod 2 is attached to a drive unit not shown to go up while rotating. A burner for core formation 4 is provided at a point of the target rod 2 or the porous base material 3 synthesized sequentially, and a burner for cladding formation 5 is provided in the vertically upper direction thereof.
Each burner is connected to a frit ($SiCl_4$, $GeCl_4$, etc.) feeder, a combustion gas ($H_2$, etc.) feeder, and a supporting gas ($O_2$, etc.) feeder, which are not shown. Moreover, an exhauster 6 is provided on the opposite side of the burners 4 and 5 while holding the target rod 2 therebetween.
In the chamber 1, the frit, the combustion gas, and the supporting gas are ejected from the burners 4 and 5 toward the target rod 2, the frit reacts to flames 7 and 8 by means of a flame hydrolysis reaction to generate glass particles, and the glass particles are deposited and attached on the target rod 2 to form the porous base material 3. The residual glass particles, which are not deposited and attached, are exhausted outside the system by the exhauster 6.
There is now demanded the reduction of a manufacture cost in relation to an optical fiber base material. Therefore, there is urgently demanded the development of a method for manufacturing the base material efficiently and massively without losing an optical characteristic. More particularly, with respect to the need of price-reduction of an optical fiber, if a large-scale optical fiber base material can be produced at high speed, the effect is extremely large.
In a vapor-phase axial deposition method, in order to synthesize a large-scale optical fiber base material at high speed, it is necessary to increase a generation amount of glass particles to be deposited. For this purpose, there is proposed a method of improving reaction efficiency of frit and multiplexing a flame for reaction. See, for example, Patent Document 1 and Patent Document 2.
That is, the method is a method of generating a flame multiply and concentrically by means of a multiple flame burner, protecting an inside flame by retreating the inside flame relative to an outside flame, and augmenting the particle size of glass particles to be generated by augmenting effective flame length.

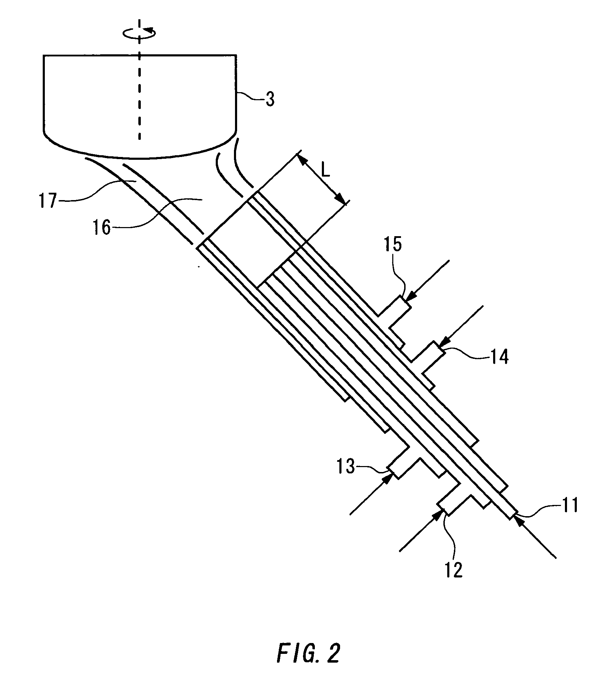

Fig. 2 is a schematic vertical cross-sectional view showing construction of a double flame burner as an example of such a multiple flame burner.
A frit supplying pipe is arranged in the center of the burner, and frit is supplied from a frit supplying port 11. A combustion gas supplying pipe and a supporting gas supplying pipe are multiply arranged to surround the frit supplying pipe, and thus combustion gas is supplied from a combustion gas supplying port for inside flame 12 and supporting gas is supplied from a supporting gas supplying port for inside flame 13. Furthermore, combustion gas and supporting gas are respectively supplied from a combustion gas supplying port for outside flame 14 and a supporting gas supplying port for outside flame 15, and thus a double flame is formed.
In addition, there is a channel through which inert gas is supplied. However, its description will be omitted.
As shown in Fig. 2, since there is used a double flame burner in which a gas channel edge of an inside flame 16 is retreated by a distance L more behind than a gas channel edge of an outside flame 17, it is possible to protect the inside flame by the outside flame, prevent the diffusion of flame, and augment effective flame length.
When the flame length of inside flame increases, an amount of sediment of glass particles increases. That is, since hydrolysis reaction of frit is accelerated by lengthening a flame, residence time of glass particles in the flame is extended. In this way, the growth of the generated glass particles is advanced and particle size becomes large, and thus sedimentary efficiency increases.
Therefore, since a multiple flame burner in which an inside burner is retreated is used, it is possible to realize the improvement of a sedimentation rate and achieve the speedup of a synthesis rate of an optical fiber base material.
Patent Document 3 is nominated as a well-known technique using a multiple flame burner. The publication discloses the relation between linear velocity of frit and linear velocity of a flame in relation to sedimentary efficiency. Furthermore, the publication discloses that combustion is performed to satisfy the following conditions in order to raise sedimentary efficiency when linear velocities of flames in a multiple flame are sequentially $V_1$, $V_2$, ..., the linear velocity of the k-th flame is $V_k$, and the linear velocity of the k+1st flame on the outside is $V_{k+1}$. In addition, $V_m$ is linear velocity of raw gas.

$$0.1V_{k+1} \leq V_k \leq 2.5V_{k+1}$$

$$V_m \leq V_{k+1}$$

$$V_m \leq V_k$$

[Patent Document 1] Japanese Utility Model Application Publication No. 57-65930
[Patent Document 2] Japanese Patent Application Publication No. 57-27935
[Patent Document 3] Japanese Patent Application Publication No. 61-186239

SUMMARY OF THE INVENTION

Problems to be solved by the Invention

Therefore, it is an object of the present invention to provide a method for manufacturing an optical fiber base material in which glass particles generated by a vapor-phase axial deposition method can efficiently be deposited at high speed and a porous base material can stably be grown.

Means for Achieving the Objects

According to the present invention, there is provided a method for manufacturing an optical fiber base material by means of a vapor-phase axial deposition method. The method for manufacturing an optical fiber base material includes: preparing a raw material supplying pipe that supplies raw gas centrally and a supporting gas channel and a combustion gas channel that are concentrically disposed outside the pipe; using a multiple flame burner forming a plurality of concentric flames; and generating and depositing glass particles in a state where a condition of $V_i < V_m \leq 2V_i$, preferably $1.3V_i < V_m \leq 1.8V_i$, is satisfied when linear velocity of a flow of the most inside flame is $V_i$ and linear velocity of the raw gas is $V_m$.

In the multiple flame burner, channel edges of frit and combustion gas and supporting gas of an inside flame may be provided behind channel edges of combustion gas and supporting gas of a flame outside the inside flame.

The summary of the invention does not necessarily describe all necessary features of the present invention. The present invention may also be a sub-combination of the features described above.

Effects of the Invention

According to the present invention, since an amount of sediment of glass particles can be improved and a large-scale porous base material can stably be produced at high speed by setting linear velocity of frit at higher speed than that of the most inside flame and thus staying the glass particles near a sedimentary surface in high density, production efficiency is improved and a manufacture cost of an optical fiber is reduced.

BRIEF DESCRIPTION OF THE DRAWINGS

Fig. 1 is a schematic cross-sectional view briefly explaining synthesis of a porous base material using a vapor-phase axial deposition method.
Fig. 2 is a schematic cross-sectional view of a double flame burner shown as an example of a multiple flame burner according to the present invention.
Fig. 3 is a schematic view showing the double flame burner that is used in an embodiment.
Fig. 4 is a characteristic view showing correlativity between a ratio of linear velocity of frit to linear velocity of an inside flame and a sedimentation rate.

DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.
According to Patent Document 3, when linear velocity $V_m$ of raw gas is changed by changing flow volume of carrier gas, in order to raise a yield of glass particles, a flow of double flame requires a condition of $V_m \leq V_o$, preferably $V_m \leq V_o = V_i$, for example when linear velocity of a flow of outside flame is $V_o$ and linear velocity of a flow of inside flame is $V_i$.
The yield of glass particles is maximum when $V_m = V_i$. However, in case of $V_m > V_o$ and $V_m > V_i$, frit hardly reacts to a flame and thus a porous base material is not grown stably.
However, in order to be able to synthesize a porous base material at high speed, it is necessary to raise a sedimentation rate and stably grow the porous base material. In this relation, the inventors of the present application found that the improvement of a real sedimentation rate is more important than a yield of glass particles. Furthermore, the inventors focused attention on linear velocity $V_i$ of the most inside flame flow from a plurality of flame flows formed by the multiple flame burner and found that the porous base material can stably be grown at higher speed than that of the conventional condition of $V_m \leq V_i$ under a condition of $V_m > V_i$.

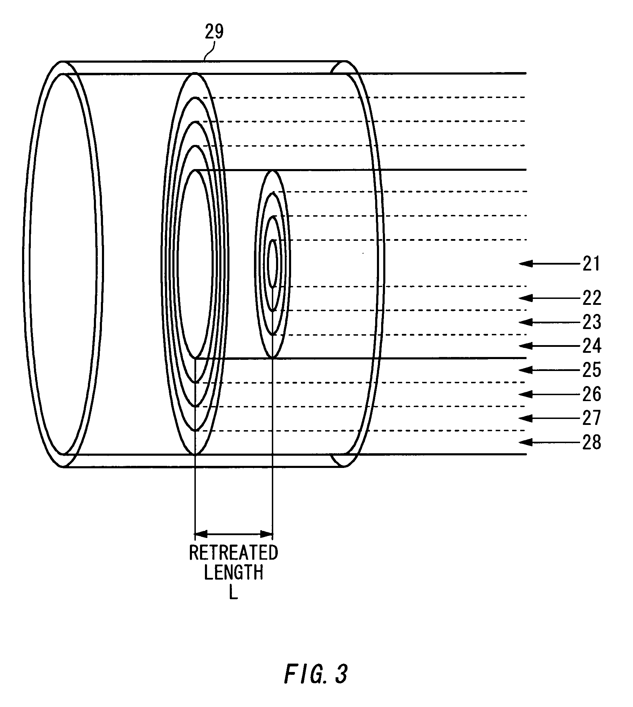

Fig. 3 is a schematic cross-sectional view showing construction of a double flame burner shown as an example of a multiple flame burner that is used in a method for manufacturing an optical fiber base material according to an embodiment of the present invention.

In Fig. 3, gas channels are concentrically formed with a central focus on a frit supplying pipe 21. The frit supplying pipe 21 is supplied with frit such as $SiCl_4$ and $GeCl_4$ along with carrier gas such as Ar, and $O_2$. A combustion gas channel 22 is supplied with $H_2$, hydrocarbon, etc., an inert gas channel 23 is supplied with Ar, He, $N_2$, etc., and a supporting gas channel 24 is supplied with $O_2$ etc. The inside flame is formed from these combustion gas and supporting gas.

Furthermore, the outside flame is formed from combustion gas and supporting gas supplied from an inert gas channel 25, a combustion gas channel 26, an inert gas channel 27, and a supporting gas channel 28. These channel edges are protected by a burner cover 29.

In addition, a gas channel edge for inside flame is retreated by length (retreated length) L behind a gas channel edge for outside flame.

Next, by means of the double flame burner, there was performed a test of checking a sedimentation rate of glass particles while changing linear velocity of frit.

The linear velocity of frit was changed by constantly holding the linear velocity $V_i$ of the inside flame as 1.2m/s and the linear velocity $V_o$ of the outside flame as 0.33m/s and changing an inside diameter of a raw material supplying pipe or flow volume of carrier gas. The porous glass base material was synthesized while changing a supplied amount of frit so that a position of a point of the porous glass base material formed by the deposition of glass particle does not go up and down and climbing speed is constant.

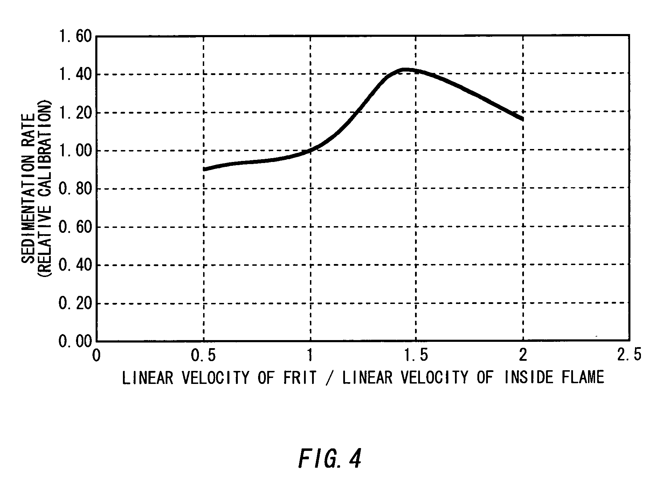

Fig. 4 is a graph showing relation between the linear velocity of frit to a flow of the obtained inside flame and the sedimentation rate. In addition, the sedimentation rate was computed by weighing the porous glass base material after terminating synthesis and dividing the weight by sedimentary time. A numeric value of the sedimentation rate on a vertical axis is a relative value in which the sedimentation rate is one when a ratio of [linear velocity of frit / linear velocity of inside flame] is one.

In Fig. 4, as the linear velocity of frit $V_m$ increases relatively, it is admitted that the sedimentation rate increases. When $V_m$ further becomes large and thus $V_m/V_i$ exceeds about 1.5, the sedimentation rate falls adversely and thus a sedimentation rate in $V_m = 2V_i$ was substantially equal to a sedimentation rate in $V_m = 1.1V_i$. Since the sedimentary efficiency when $1.3 \leq V_m/V_i \leq 1.8$

is 1.3 times greater than efficiency when $V_m/V_i = 1$, it is possible to synthesize a porous base material at high speed.

When flow velocity of the inside flame and the outside flame is changed, the same tendency as that of Fig. 4 was obtained. The reason that the diffusion of glass particles in a flame is controlled, the glass particles exist near a sedimentary surface in high density, and an amount of sediment of glass particles increases due to a thermophoresis effect, by setting the linear velocity of frit more quickly than that of a flow of the inside flame.

When the linear velocity of frit increases further, it is considered that residence time of the glass particles near the sedimentary surface decreases and thus an amount of sediment decreases.

In this manner, a sedimentation rate is important for high-speed synthesis of a porous base material, and the sedimentation rate improves in the range of $V_i < V_m \leq 2V_i$.

The linear velocity of frit, the linear velocity of inside flame, and the linear velocity of outside flame can also be adjusted by changing flow volume of combustion gas and supporting gas besides changing an inside diameter and an outside diameter of concentric channels and flow volume of carrier gas.

In that case, as described above, it is important that the linear velocity $V_m$ of frit and the linear velocity $V_i$ of inside flame is adjusted so that $V_i < V_m \leq 2V_i$, preferably $1.3V_i \leq V_m \leq 1.8V_i$ is satisfied, and thus and a porous base material can stably be grown at high speed relative to $V_m \leq V_i$.

In this way, since the linear velocity of frit is higher speed than that of the most inside flame flow in a multiple flame, the diffusion of glass particles in the flame can be controlled, the glass particles can exist near a sedimentary surface in high density, and an amount of sediment of the glass particles can be increased by a thermophoresis effect.

At this time, since a multiple flame burner having a retreated inside flame is used, the inside flame can be protected by an outside flame, the diffusion of the inside flame can be prevented, substantially effective length of the inside flame can increase, frit can fully be reacted, particle size of glass particles can increase, and reaction efficiency of raw material can increase.

(Embodiment 1)

The porous base material was synthesized using the double flame burner having a burner outside diameter of 50mm and retreated length of 35mm shown in Fig. 3.

The frit supplying pipe 21 of a burner for core formation is supplied with $SiCl_4$ of 1200mL/min and $GeCl_4$ of 80mL/min using $O_2$ as a carrier. Moreover, the combustion gas channels 22 and 26 are supplied with $H_2$, the inert gas channels 23, 25, and 27 are supplied with Ar, and the supporting gas channels 24 and 28 are

supplied with $O_2$. The linear velocity $V_m$ of frit and the linear velocity $V_i$ of inside flame and the linear velocity $V_o$ of outside flame of a burner for core formation are respectively set to 2.17m/s, 1.31m/s, and 0.33m/s in sequence, by adjusting the inside diameter of the frit supplying pipe 21.

Under such a condition ($V_m$=1.66$V_i$), the deposition of glass particles is stably performed at high speed and the velocity of core formation was 52.3g/h. There was obtained a large-scale porous base material having a stable step-index type profile in a longitudinal direction and effective length of 800mm.

(Comparative Example 1)

The porous base material was synthesized in a state where the linear velocity of frit is approximately equal to the linear velocity of inside flame.

The frit supplying pipe of the burner for core formation is supplied with $SiCl_4$ of 750mL/min and $GeCl_4$ of 50mL/min using $O_2$ as a carrier. The linear velocity $V_m$ of frit and the linear velocity $V_i$ of inside flame and the linear velocity $V_o$ of outside flame of the burner for core formation are respectively set to 1.20m/s, 1.20m/s, and 0.33m/s in sequence, by adjusting the inside diameter of the frit supplying pipe.

Under such a condition ($V_m$=$V_i$), the deposition of glass particles was stably performed. However, the velocity of core formation was 38.6g/h.

INDUSTRIAL APPLICABILITY

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

**Claims**

1. A method for manufacturing an optical fiber base material by means of a vapor-phase axial deposition method, comprising:

    preparing a raw material supplying pipe that supplies raw gas centrally and a supporting gas channel and a combustion gas channel that are concentrically disposed outside the pipe;
    using a multiple flame burner forming a plurality of concentric flames; and
    generating and depositing glass particles in a state where a condition of $V_i < V_m \le 2V_i$ is satisfied when linear velocity of a flow of the most inside flame is $V_i$ and linear velocity of the raw gas is $V_m$.

2. The method for manufacturing an optical fiber base material as claimed in claim 1, wherein said generating glass particles comprises generating glass particles in a state where a condition of $1.3V_i < V_m \le 1.8V_i$ is satisfied.

3. The method for manufacturing an optical fiber base material as claimed in claim 1 or 2, wherein in the multiple flame burner, channel edges of frit and combustion gas and supporting gas of an inside flame are provided behind channel edges of combustion gas and supporting gas of a flame outside the inside flame.

FIG. 1

*FIG. 2*

FIG. 3

FIG. 4

**INTERNATIONAL SEARCH REPORT**

| | International application No. |
|---|---|
| | PCT/JP2004/009742 |

**A. CLASSIFICATION OF SUBJECT MATTER**
Int.Cl$^7$ C03B37/018

According to International Patent Classification (IPC) or to both national classification and IPC

**B. FIELDS SEARCHED**

Minimum documentation searched (classification system followed by classification symbols)
Int.Cl$^7$ C03B37/00-37/16

Documentation searched other than minimum documentation to the extent that such documents are included in the fields searched

| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 61-186239 A (Nippon Telegraph And Telephone Corp.), 19 August, 1986 (19.08.86), Claims; page 5, lower right column & EP 154500 A2 | 1-3 |
| A | JP 2002-160926 A (Sumitomo Electric Industries, Ltd.), 04 June, 2002 (04.06.02), Claims; tables 1, 2; comparative example 4 & US 2002/0062659 A1 | 1-3 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 August, 2004 (23.08.04) | 07 September, 2004 (07.09.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/009742 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 63-159234 A  (Hitachi Cable, Ltd.),<br>02 July, 1988 (02.07.88),<br>Claims; page 2, lower left column, lines 10 to 20; page 3, lower left column, lines 8 to 10<br>(Family: none) | 1-3 |
| A | JP 61-270226 A  (The Furukawa Electric Co., Ltd.),<br>29 November, 1986 (29.11.86),<br>Claims; page 3, lower left column, lines 16 to 19<br>& EP 204461 A2 | 1-3 |

Form PCT/ISA/210 (continuation of second sheet) (January 2004)